# EUROPEAN PATENT APPLICATION

(11) **EP 3 421 952 A1**
(43) Date of publication of application: **02.01.2019**
(21) Application number: 17756112.3
(22) Date of filing: 31.01.2017
(51) Int. Cl.: G01J 1/06, G01J 1/02

(54) **INFRARED SENSOR DEVICE**

(30) Priority: 22.02.2016 JP 2016030868
(71) Applicant: Mitsubishi Materials Corporation, Chiyoda-ku Tokyo 100-8117 (JP)
(72) Inventor: HIRANO, Shingo, Ibaraki 311-0102 (JP); TARI, Kazuyoshi, Saitama 330-8508 (JP); HOSOKAWA, Yusuke, Ibaraki 311-0102 (JP); NAKAMURA, Kenzo, Ibaraki 311-0102 (JP); NISHIYAMA, Masashi, Ibaraki 311-0102 (JP); NAKAMURA, Kenji, Ibaraki 311-0102 (JP); YOTSUMOTO, Koji, Saitama 368-8502 (JP); KOBAYASHI, Isao, Saitama 368-8502 (JP); HIGUCHI, Yoshihiro, Saitama 368-8502 (JP)
(74) Representative: Hoffmann Eitle
(86) International application number: PCT/JP2017/003440
(87) International publication number: WO 2017/145670

(57) **Abstract**

To provide an infrared sensor apparatus that has a small profile and has a small heat capacity of the light guiding path member, and therefore can measure a temperature with high accuracy.

The present infrared sensor apparatus includes: an infrared sensor body and a light guiding path member that is provided so as to surround at least the infrared receiving surface of the infrared sensor body and that has an opening immediately above the infrared receiving surface, wherein the light guiding path member is made of a plate material and at least one of the surfaces surrounding the infrared receiving surface is an infrared reflecting surface that is composed of an inclined plate part with the surface thereof on the infrared receiving surface side being inclined towards the opening side.

## Description

### BACKGROUND OF THE INVENTION

### [Field of the Invention]

The present invention relates to an infrared sensor apparatus that measures a temperature or the like of an object to be measured such as a fuser roller for fixing toner by detecting infrared radiation from the object to be measured.

### [Description of the Related Art]

Conventionally, an infrared radiation sensor is used as a temperature sensor for measuring a temperature of an object to be measured by detecting infrared radiation radiated from the object in a non-contact manner. Such an infrared radiation sensor is employed in a wide variety of applications including, for example, measuring a temperature of a fuser roller for fixing toner (developer) built in a copying machine, printer, or the like, controlling a room temperature by an air conditioner, and the like.

For example, Patent document 1 discloses a non-contact temperature measuring sensor including an infrared radiation sensor, an optical lens, and a light guiding device. The light guiding device used in this non-contact temperature measuring sensor is installed in a housing so as to guide infrared radiation to the optical lens that is provided in the housing, and has a tapered inner surface with a varied thickness.

In addition, Patent document 2 discloses an infrared radiation detecting apparatus including a substrate for supporting an infrared radiation sensor chip and lens, wherein a through-hole is formed in the substrate in order that an infrared receiving surface and an optical member are directly opposed to each other. The substrate of this infrared radiation detecting apparatus has a generally rectangular parallelepiped shape. In addition, the diameter of the through-hole is gradually increased from the infrared radiation sensor chip side towards the lens side, and the surface thereof is treated, for example, by coating it with a material that can absorb infrared radiation in order to prevent an unnecessary scattered-light component from being received.

Furthermore, Patent document 3 discloses a non-contact temperature sensor that includes a guiding cylinder that is provided so as to define a visual field range for detecting a temperature by a heat sensitive element for detecting infrared radiation. The guiding cylinder of this non-contact temperature sensor exhibits a generally trapezoid shape having a medially inclined gradient with a small inner diameter on the opening side thereof.

### [Prior Art Documents]

### [Patent Documents]

[Patent Document 1] Japanese Unexamined Patent Application Publication No. H10-227697
[Patent Document 2] Japanese Unexamined Patent Application Publication No. 2014-77666
[Patent Document 3] Japanese Unexamined Patent Application Publication No. 2014-89108

### SUMMARY OF THE INVENTION

### [Problems to be solved by the Invention]

The following problems still remain in the conventional technologies described above.

Specifically, the technology disclosed in Patent Document 1, in which the thickness of the thick-walled light guiding device is varied so as to form the tapered light guiding path, has a problem that a part of the light guiding path near the infrared radiation sensor can become thick, thereby increasing the volume thereof. As a consequence, the heat capacity of the light guiding device can be increased, and thus the radiation and the thermal conductivity from the light guiding path may have a great influence on the sensitivity and precision of the infrared radiation sensor.

The technology disclosed in Patent Document 2, in which the through-hole that plays a role of a light guiding path is formed in the housing having a generally rectangular parallelepiped shape, also has a problem that the volume of the housing that plays a role of a light guiding path member itself can become large. As a consequence, the heat capacity of the housing can be increased, and thus the radiation and the thermal conductivity from the housing may have a great influence on the sensitivity and precision of the infrared radiation sensor.

The technology disclosed in Patent Document 3, in which the guiding cylinder is made of a thin material for controlling the amount of infrared radiation that can reach the infrared receiving surface, further has a problem that the size of the light guiding device must be increased in order to guide a desired amount of infrared radiation to the infrared receiving surface inside the guiding cylinder because the guiding cylinder exhibits a generally trapezoid shape having a medially inclined gradient with a small inner diameter on the upper opening side thereof.

The present invention has been made in view of the aforementioned circumstances, and an object of the present invention is to provide an infrared sensor apparatus that has a small profile and has a small heat capacity of the light guiding path member, and therefore can measure a temperature with high accuracy.

### [Means for Solving the Problems]

The present invention adopts the following configuration in order to overcome the aforementioned problems. Specifically, an infrared sensor apparatus according to a first aspect of the present invention comprises: an infrared sensor body and a cylindrical light guiding path member that is provided so as to surround at least an infrared receiving surface of the infrared sensor body and that has an opening immediately above the infrared receiving surface, wherein the light guiding path member is made of a plate material and at least one of the surfaces of the light guiding path member surrounding the infrared receiving surface is an infrared reflecting surface that is composed of an inclined plate part with the surface thereof on the infrared receiving surface side being inclined towards the opening side.

In the infrared sensor apparatus according to the first aspect of the present invention, since the light guiding path member is made of a plate material and at least one of the surfaces of the light guiding path member surrounding the infrared receiving surface is an infrared reflecting surface that is composed of an inclined plate part with the surface thereof on the infrared receiving surface side being inclined towards the opening side, the inclined plate part made of the plate material, whose volume can be made small, is inclined itself, thus allowing the heat capacity to be reduced. In addition, a direct incident light that is made incident inside the light guiding path member and then directly reaches the infrared receiving surface can be controlled so as not to be made incident on the infrared receiving surface, and an incident light other than the primary reflected light that is reflected once on the light guiding path member and then reaches the infrared receiving surface can be prevented from being made incident on the infrared receiving surface.

An infrared sensor apparatus according to a second aspect of the present invention is characterized by the infrared sensor apparatus according to the first aspect of the present invention comprising a substrate on which the infrared sensor body and the light guiding path member are installed, wherein the light guiding path member has a supporting plate part that is erected on the substrate and that is configured to support the inclined plate part so as to be spaced apart from the infrared sensor body and the substrate, and the supporting plate part is installed so as to be spaced apart from the infrared sensor body.

Specifically, in this infrared sensor apparatus, since the light guiding path member has the supporting plate part that is erected on the substrate and that is configured to support the inclined plate part so as to be spaced apart from the infrared sensor body and the substrate and since the supporting plate part is installed so as to be spaced apart from the infrared sensor body, the inclined plate part and the supporting plate part are not in contact with the infrared sensor body, thus allowing the thermal resistance to be increased. As a consequence, the direct heat transfer from the light guiding path member to the infrared sensor body can be suppressed.

An infrared sensor apparatus according to a third aspect of the present invention is characterized by the infrared sensor apparatus according to the second aspect, wherein the lower portion of the supporting plate part is installed more apart from the infrared sensor body than the lower portion of the inclined plate part.

Specifically, in this infrared sensor apparatus, since the lower portion of the supporting plate part is installed more apart from the infrared sensor body than the lower portion of the inclined plate part, the supporting plate part can be more separated from the infrared sensor body no matter where the inclined plate part is located, which can suppress the heat transfer from the supporting plate part through the substrate to the infrared sensor body.

An infrared sensor apparatus according to a fourth aspect of the present invention is characterized by the infrared sensor apparatus according to the second or third aspect, wherein a gap or cavity is formed between the supporting plate part and the inclined plate part.

Specifically, in this infrared sensor apparatus, since a gap or cavity is formed between the supporting plate part and the inclined plate part, the heat capacity can be further reduced, thus allowing a quick thermal response. Furthermore, since heat is hard to be transferred from the inclined plate part to the supporting plate part, the heat from the supporting plate part to the substrate and the infrared sensor body side can be further suppressed. In addition, since a gap or cavity is formed between the supporting plate part and the inclined plate part, a temperature detection error caused by a change in temperature outside the light guiding path member can be suppressed.

An infrared sensor apparatus according to a fifth aspect of the present invention is characterized by the infrared sensor apparatus according to any one of the first to fourth aspects, wherein the infrared sensor body comprises: an insulating film having the infrared receiving surface on the top surface thereof; first and second heat sensitive elements that are provided so as be spaced apart from each other on the bottom surface of the insulating film; and first and second conductive wiring films that are formed on the bottom surface of the insulating film and that are connected to the first and second heat sensitive elements respectively, wherein the infrared receiving surface is provided on the area of the top surface of the insulating film on the first heat sensitive element side, while the area on the second heat sensitive element side is shielded from infrared radiation.

Specifically, in this infrared sensor apparatus, since the heat sensitive element is provided on the insulating film, the heat transfer from the light guiding path member to the heat sensitive element is further suppressed, thereby allowing measurement with high accuracy.

### [Effects of the Invention]

According to the present invention, the following effects may be provided.

Specifically, according to the infrared sensor apparatus of the present invention, since the light guiding path member is made of a plate material and at least one of the surfaces surrounding the infrared receiving surface is an infrared reflecting surface that is composed of an inclined plate part with the surface thereof on the infrared receiving surface side being inclined towards the opening side, the inclined plate part made of the plate material, whose volume can be made small, is inclined itself, thus allowing the heat capacity to be reduced. In addition, a direct incident light that is made incident inside the light guiding path member and then directly reaches the infrared receiving surface can be controlled so as not to be made incident on the infrared receiving surface, and a light component other than the primary reflected light that is reflected once on the light guiding path member and then reaches the infrared receiving surface can be prevented from being made incident on the infrared receiving surface.

Therefore, in the infrared sensor apparatus of the present invention, the light guiding path member having a small heat capacity allows a high thermal responsivity, and the suppression of a light component outside the view angle can lead to a high measurement directivity. Therefore, the present infrared sensor apparatus is particularly suitable for a temperature sensor for measuring a temperature of a fuser roller for fixing toner used in a copying machine, printer, or the like.

### BRIEF DESCRIPTION OF THE DRAWINGS

FIG. 1 is a cross-sectional view showing an infrared sensor apparatus according to a first embodiment of the present invention.
FIG. 2 is a perspective view showing an infrared sensor body according to the first embodiment.
FIG. 3 is a cross-sectional view showing the infrared sensor body according to the first embodiment.
FIG. 4 is a back side view showing an insulating film on which a wiring film is formed in the first embodiment.
FIG. 5 is a cross-sectional view showing an infrared sensor apparatus according to a second embodiment of the present invention.
FIG. 6 is a cross-sectional view showing an infrared sensor apparatus according to a third embodiment of the present invention.
FIG. 7 is a cross-sectional view showing an infrared sensor apparatus according to a fourth embodiment of the present invention.
FIG. 8 is a perspective view of another example of the infrared sensor apparatus according to the first embodiment of the present invention with a portion thereof being cut away.

### DESCRIPTION OF THE EMBODIMENTS

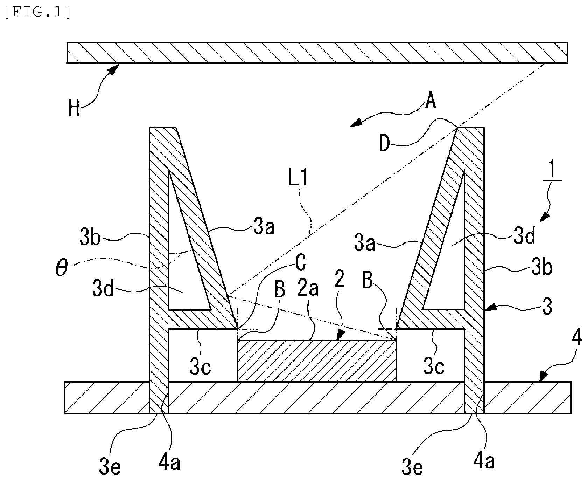

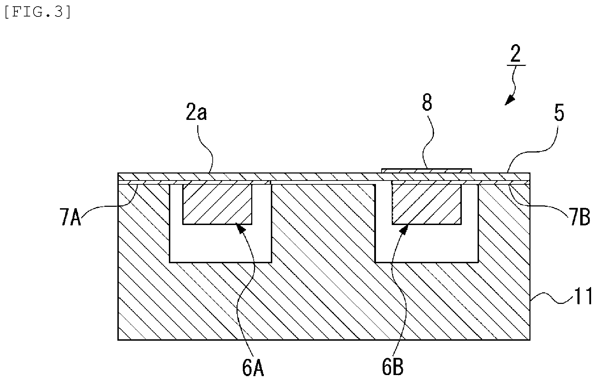

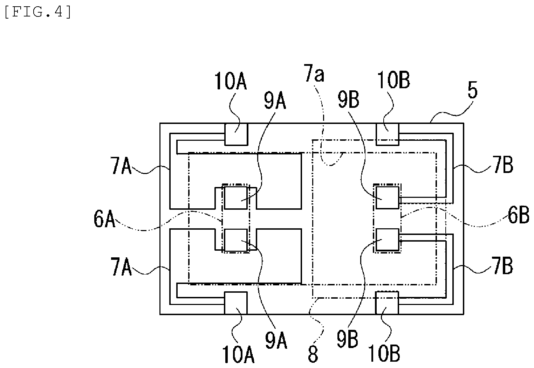

Hereinafter, an infrared sensor apparatus according to a first embodiment of the present invention will be described with reference to FIGs. 1 to 4.

As shown in FIG. 1, an infrared sensor apparatus 1 according to the present embodiment, which is for measuring a temperature of a fuser roller for fixing toner for example, is installed with an opening A thereof facing to an object to be measured H such as a fuser roller.

This infrared sensor apparatus 1 includes an infrared sensor body 2; a cylindrical light guiding path member 3 that is provided so as to surround at least an infrared receiving surface 2a of the infrared sensor body 2 and that has the opening A immediately above the infrared receiving surface 2a; and a substrate 4 on which the infrared sensor body 2 and the light guiding path member 3 are installed. Note that the infrared sensor body 2 is schematically shown in FIG. 1.

The light guiding path member 3 is made of a plate material, and at least one of the surfaces surrounding the infrared receiving surface 2a is an infrared reflecting surface that is composed of an inclined plate part 3a with the surface thereof on the infrared receiving surface 2a side being inclined towards the opening A side. In the present embodiment, each of the inclined plate parts 3a is provided on each of the two surfaces that opposes to each other. An angle θ is defined by these inclined plate parts 3a so that the light that reaches the inside of the light guiding path member 3 is reflected once on the inner surface of the light guiding path member 3 before reaching the infrared receiving surface 2a. Specifically, when the light that is made incident inside the light guiding path member 3 so as to make contact with a light guiding path tip D (incident light L1) is reflected on the inner surface of the light guiding path member 3 opposing to the light guiding path tip D, the reflected light will reach an infrared receiving surface end B that is located on the same side as the light guiding path tip D.

When the angle is greater than θ, less light will reach the infrared receiving surface 2a, which may disadvantageously lower the infrared receiving sensitivity. When the angle is below θ, more light is made incident from a relatively wider angle than from the angle θ, which may cause a large temperature error. However, even when the angle θ described above is attained, a reduced amount of light will reach the infrared receiving surface 2a when the inclined plate part 3a inside of the light guiding path member 3 covers the infrared receiving surface 2a. Therefore, the inclined plate part 3a is preferably installed so as not to cover the infrared receiving surface 2a. Specifically, it is desired that an inclined plate part base end C is positioned above the infrared receiving surface 2a at the infrared receiving surface end B on the same side and is on the normal line relative to the infrared receiving plane.

This light guiding path member 3 has a supporting plate part 3b that is erected on the substrate 4 and that is configured to support the inclined plate part 3a so as to be spaced apart from the infrared sensor body 2 and the substrate 4.

The supporting plate part 3b is installed so as to be spaced apart from the infrared sensor body 2.

In addition, the lower portion of the supporting plate part 3b is installed so as to be more spaced apart from the infrared sensor body 2 than the lower portion of the inclined plate part 3a.

The light guiding path member 3 has a lower portion supporting part 3c that is connected to the lower end of the inclined plate part 3a. Specifically, the upper end of the supporting plate part 3b is connected to the upper end of the inclined plate part 3a and the lower end of the inclined plate part 3a is connected to the lower portion supporting part 3c. This lower portion supporting part 3c is arranged in parallel to the substrate 4 and one end thereof abuts to the halfway of the supporting plate part 3b. Therefore, the lower portion of the supporting plate part 3b is installed on the substrate 4 so as to be more spaced apart from the infrared sensor body 2 than the lower end of the inclined plate part 3a.

In addition, as described above, a cavity 3d is formed between the supporting plate part 3b and the inclined plate part 3a by the lower portion supporting part 3c. Specifically, the cavity 3d having a triangular cross-section is formed between the supporting plate part 3b and the inclined plate part 3a.

The supporting plate part 3b, the inclined plate part 3a, and the lower portion supporting part 3c are made of a metal thin plate such as a stainless steel.

The light guiding path member 3 has a square-cylindrical shape as a whole, and has a plurality of fixing protrusions 3e at the lower portion of the supporting plate part 3b or the like that are inserted into a plurality of mounting holes 4a formed on the substrate 4. Specifically, the light guiding path member 3 is fixed on the substrate 4 by inserting the fixing protrusions 3e into the mounting holes 4a of the substrate 4. Note that the light guiding path member 3 may be fixed by inserting the fixing protrusions 3e into the mounting holes 4a and then bending the tip of the fixing protrusions 3e so as to prevent them from falling off.

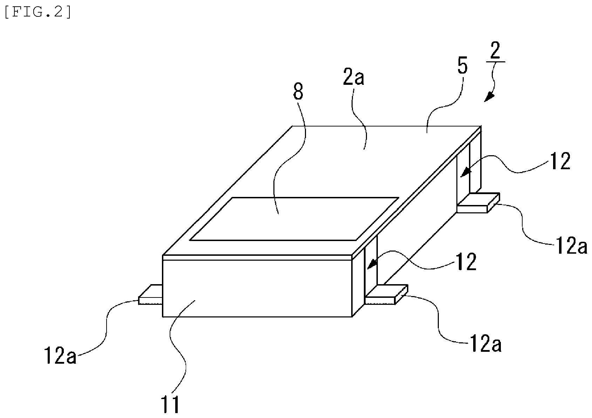

As shown in FIGs. 2 to 4, the infrared sensor body 2 includes: an insulating film 5 having the infrared receiving surface 2a on the top surface thereof; first and second heat sensitive elements 6A and 6B that are provided so as to be spaced apart from each other on the bottom surface of the insulating film 5; and first and second conductive wiring films 7A and 7B that are formed on the bottom surface of the insulating film 5 and that are connected to the first and second heat sensitive elements 6A and 6B respectively.

In addition, the infrared sensor body 2 includes a terminal supporting member 11 made of a resin that is arranged on the bottom surface side of the insulating film 5 and a plurality of mounting terminals 12 that are provided on the terminal supporting member 11 with the lower portion thereof being arranged on the lower portion of the terminal supporting member 11.

Furthermore, the infrared receiving surface 2a is provided on the area of the top surface of the insulating film 5 on the first heat sensitive element 6A side, while the area on the second heat sensitive element 6B side is shielded from infrared radiation.

On the area on the second heat sensitive element 6B side, an infrared reflection film 8 is patterned so as to shield infrared radiation, that is, there is an area provided that is shielded from infrared radiation.

Specifically, the infrared reflection film 8 is provided on the top surface of the insulating film 5 so as to oppose to the second heat sensitive element 6B. This infrared reflection film 8 is formed into a rectangular shape on the area of the top surface of the insulating film 5 on the second heat sensitive element 6B side.

The infrared reflection film 8 is made of a material having a higher infrared reflectance than that of the insulating film 5 and is formed by coating a copper foil with a gold plating film. This film may be made of, for example, a mirror finished aluminum vapor-deposited film, aluminum foil, or the like other than the gold plating film. This infrared reflection film 8 is formed in size larger than that of the second heat sensitive element 6B so as to cover the second heat sensitive element 6B.

The first and second heat sensitive elements 6A and 6B are chip thermistors at both ends of which terminal portions are formed. Such thermistors include NTC-type, PTC-type, CTR-type thermistors, and the like, but in the present embodiment, a NTC-type thermistor is employed for the first and second heat sensitive elements 6A and 6B, for example. This thermistor is made of a Mn-Co-Cu or Mn-Co-Fe based thermistor material, or the like.

To one end of each of the first and second wiring films 7A and 7B is connected adhesive electrodes 9A and 9B respectively that are formed on the insulating film 5, while to the other end thereof is connected terminal electrodes 10A and 10B respectively that are formed on the insulating film 5.

In addition, to the adhesive electrodes 9A and 9B are adhered their respective terminal portions of the first and second heat sensitive elements 6A and 6B with a conductive adhesive such as a solder.

The terminal electrodes 10A and 10B are also adhered to wiring (not shown) on the substrate 4 with a conductive adhesive such as a solder.

The substrate 4 is a circuit substrate such as a PCB substrate, for example.

The insulating film 5 is made of a polyimide resin sheet having a rectangular shape, while the infrared reflection film 8, the first wiring film 7A, and the second wiring film 7B are made of a copper foil. Specifically, these elements compose a double-sided flexible substrate in which the infrared reflection film 8, the first wiring film 7A, and the second wiring film 7B made of a copper foil are patterned on both surfaces of the insulating film 5 as a polyimide substrate.

The mounting terminals 12 are made of a tinned copper alloy, for example. These mounting terminals 12 extend to the upper portion of the terminal supporting member 11 so as to connect to first and second terminal electrodes 10A and 10B in the corresponding first and second wiring films 7A and 7B respectively.

In addition, the lower portion 12a of the mounting terminal 12 is provided so as to project downward more than the bottom surface of the terminal supporting member 11. Specifically, the mounting terminal 12 extends above and below so that the lower portion 12a projects downward more than the bottom surface of the terminal supporting member 11 and is further bent to project laterally thereby forming into a generally L-shape.

Each of the mounting terminals 12 is arranged in the vicinity of each of the four corners of the terminal supporting member 11 and is integrated into the terminal supporting member 11 by insert molding, fitting, or the like.

The terminal supporting member 11 is made of a resin such as PPS (polyphenylenesulfide resin), and is formed into a frame shape along at least the outer edge portion of the insulating film 5. Specifically, this terminal supporting member 11 is composed of an outer frame part along the outer edge portion of the insulating film 5 and a middle frame part passing across the middle part between the first and second heat sensitive elements 6A and 6B.

Then, the infrared sensor apparatus 1 according to the present embodiment was examined for the detection temperature error using, for example, a planar heating element of a 10 cm square, which is a planar heating element having a limited heat generating area, as an object to be measured, and the detection temperature error was found to be 1.2°C. On the other hand, when using a light guiding path member merely having a square-cylindrical shape without the inclined plate part 3a as a comparison, the detection temperature error was found to be 3.0°C. Specifically, as compared with using the light guiding path member without the inclined plate part 3a, the infrared sensor apparatus 1 according to the present embodiment exhibits a significantly small detection temperature error, thereby allowing temperature measurement with high accuracy.

As described above, in the infrared sensor apparatus 1 according to the present embodiment, since the light guiding path member 3 is made of a plate material and at least one of the surfaces surrounding the infrared receiving surface 2a is an infrared reflecting surface composed of an inclined plate part 3a with the surface thereof on the infrared receiving surface 2a side being inclined towards the opening A side, the inclined plate part 3a made of the plate material, whose volume can be made small, is inclined itself, thus allowing the heat capacity to be reduced. In addition, a direct incident light that is made incident inside the light guiding path member 3 and then directly reaches the infrared receiving surface 2a can be controlled so as not to be made incident on the infrared receiving surface 2a, and a light component other than the primary reflected light that is reflected once on the light guiding path member 3 and then reaches the infrared receiving surface 2a can be prevented from being made incident on the infrared receiving surface 2a.

In addition, since the light guiding path member 3 has the supporting plate part 3b that is erected on the substrate 4 and that is configured to support the inclined plate part 3a so as to be spaced apart from the infrared sensor body 2 and the substrate 4 and since the supporting plate part 3b is installed so as to be spaced apart from the infrared sensor body 2, the inclined plate part 3a and the supporting plate part 3b are not in contact with the infrared sensor body 2, thus allowing the thermal resistance to be increased. As a consequence, the direct heat transfer from the light guiding path member 3 to the infrared sensor body 2 can be suppressed.

In addition, since the lower portion of the supporting plate part 3b is installed so as to be more spaced apart from the infrared sensor body 2 than the lower portion of the inclined plate part 3a, the supporting plate part 3b can be more separated from the infrared sensor body 2 no matter where the inclined plate part 3a is located. As a consequence, the heat transfer from the supporting plate part 3b through the substrate 4 to the infrared sensor body 2 can be suppressed.

In addition, since the cavity 3d is formed between the supporting plate part 3b and the inclined plate part 3a, the heat capacity can be further reduced, thus allowing a quick thermal response. Furthermore, since heat is hard to be transferred from the inclined plate part 3a to the supporting plate part 3b, the heat from the supporting plate part 3b to the substrate 4 and the infrared sensor body 2 side can be further suppressed.

In particular, since the lower end of the inclined plate part 3a is supported by the lower portion supporting part 3c in the first embodiment, the inclined state of the inclined plate part 3a as well as the shape of the light guiding path member 3 can be stabilized.

In addition, since the cavity 3d is formed between the supporting plate part 3b and the inclined plate part 3a, a temperature detection error caused by a change in temperature outside the light guiding path member 3 can be suppressed. Furthermore, since the lower portion supporting part 3c is provided at the lower end of the inclined plate part 3a, a relatively closed space (the cavity 3d) is formed at a gap between the supporting plate part 3b and the inclined plate part 3a, which can suppress a change in the surface temperature of the inclined plate part 3a. As a result, the temperature detection error of the infrared sensor apparatus can be suppressed.

In addition, since the first and second heat sensitive elements 6A and 6B are provided on the insulating film 5, the heat transfer from the light guiding path member 3 to the heat sensitive elements can be further suppressed, thus allowing measurement with high accuracy.

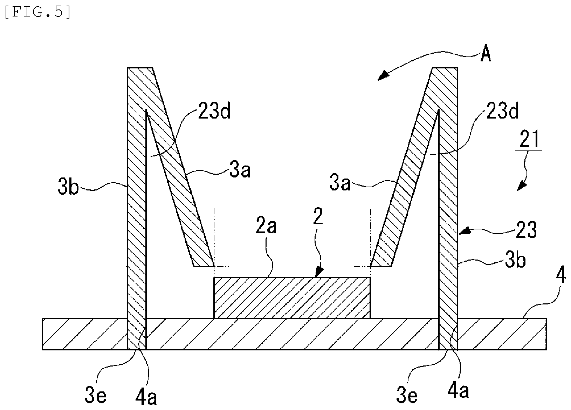

Next, infrared sensor apparatus according to second to fourth embodiments of the present invention will be described below with reference to FIGs. 5 to 7. Note that, in the following description of each embodiment, the same components as those in the first embodiment described above are denoted by the same reference numerals, and thus the description thereof is omitted.

The second embodiment is different from the first embodiment in the following points. In the first embodiment, the light guiding path member 3 has the lower portion supporting part 3c, whereas an infrared sensor apparatus 21 according to the second embodiment does not have the lower portion supporting part 3c in a light guiding path member 23 as shown in FIG. 5.

Accordingly, not the cavity 3d but a gap 23d is formed between the supporting plate part 3b and the inclined plate part 3a in the second embodiment.

As described above, in the infrared sensor apparatus 21 according to the second embodiment, since the gap 23d is formed between the supporting plate part 3b and the inclined plate part 3a, the heat capacity of the light guiding path member 23 can be reduced. In particular, since the lower portion supporting part 3c is not provided in the second embodiment, the heat capacity of the light guiding path member 23 can be further reduced than that in the first embodiment.

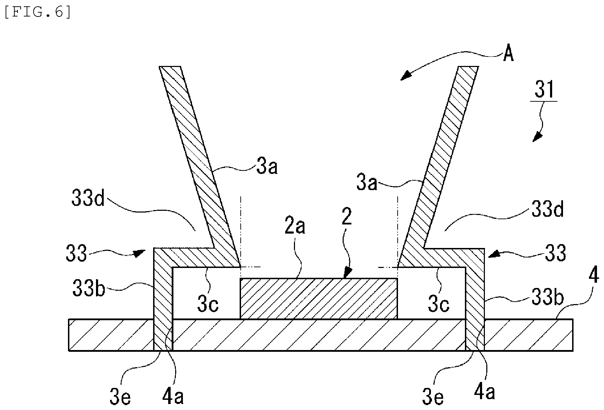

Next, the difference of a third embodiment from the second embodiment will be described below. In the second embodiment, the gap 23d is formed by the supporting plate part 3b and the inclined plate part 3a without the lower portion supporting part 3c, whereas in an infrared sensor apparatus 31 according to the third embodiment, a gap 33d is formed by the lower portion supporting part 3c and the inclined plate part 3a of the light guiding path member 33 as shown in FIG. 6.

Specifically, in the third embodiment, a supporting plate part 33b is short in height and the upper portion of the inclined plate part 3a is not fixed to the supporting plate part 33b, while the lower portion of the inclined plate part 3a is fixed to the lower portion supporting part 3c.

As described above, in the infrared sensor apparatus 31 according to the third embodiment, since the gap 33d is formed between the lower portion supporting part 3c and the inclined plate part 3a, the heat capacity of the light guiding path member 33 can be reduced as in the second embodiment. In addition, since the supporting plate part 33b is short in height, the heat capacity of the light guiding path member 33 can be further reduced than that in the first embodiment.

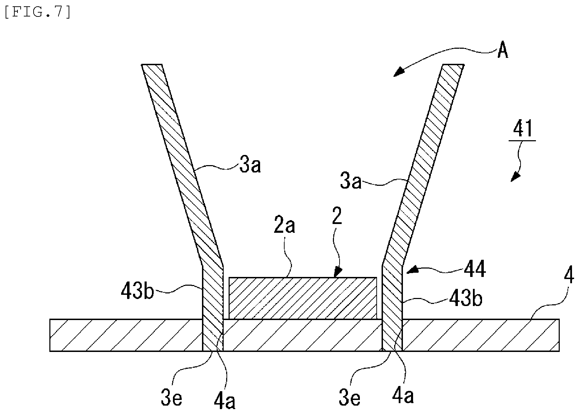

Next, the difference of a fourth embodiment from the second embodiment will be described below. In the second embodiment, the lower portion of a supporting plate part 3b is more spaced apart from the infrared sensor body 2 than the lower end of the inclined plate part 3a, whereas in an infrared sensor apparatus 41 according to the fourth embodiment, the lower end of the inclined plate part 3a is connected to the upper end of a supporting plate part 43b and the supporting plate part 43b is in proximity to the infrared sensor body 2 as shown in FIG. 7.

Specifically, in the fourth embodiment, the supporting plate part 43b does not have the lower portion supporting part 3c and the inclined plate part 3a is supported in an erected state on the upper portion of the supporting plate part 43b.

Therefore, since the supporting plate part 43b is located closer to the infrared sensor body 2 than the lower end of the inclined plate part 3a, heat can be easily transferred from the supporting plate part 43b through the substrate 4 to the infrared sensor body 2 than in the second embodiment. However, since a light guiding path member 43 itself can be composed of less number of plate materials, the heat capacity can be further reduced.

The technical scope of the present invention is not limited to the aforementioned embodiments, but the present invention may be modified in various ways without departing from the scope or teaching of the present invention.

For example, in each embodiment described above, although the inclined plate part is provided on the two surfaces opposing to each other, the inclined plate part may be provided on at least one of the inner surfaces of light guiding path member, and the plane and angle formed by the inclined plate part can be set depending on the form or the like of a heat source (object to be measured) used.

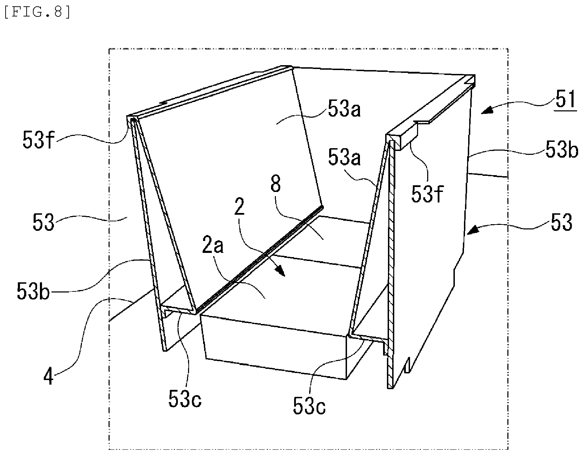

In addition, in the first embodiment, although the light guiding path member is formed by bending one piece of metal thin plate, a supporting plate part 53b may be formed with a separate metal thin plate from an inclined plate part 53a and a lower portion supporting part 53c like another example as shown in FIG. 8. In this case, the inclined plate part 53a and the lower portion supporting part 53c can be installed with a locking part 53f having a U-shaped section formed at the upper portion of the inclined plate part 53a being hooked to the upper end of the supporting plate part 53b, for example.

In addition, in each embodiment described above, although a chip thermistor is employed for the first and second heat sensitive elements, a thin film thermistor may be also employed for the first and second heat sensitive elements.

Note that, although a thin film thermistor or a chip thermistor is employed for the heat sensitive elements as described above, a pyroelectric element or the like other than a thermistor may be employed.

### [Reference Numerals]

1, 21, 31, 41, 51: infrared sensor apparatus, 2: infrared sensor body, 2a: infrared receiving surface, 3, 23, 33, 43, 53: light guiding path member, 3a, 53a: inclined plate part, 3b, 33b, 43b, 53b: supporting plate part, 3d: cavity, 4: substrate, 5: insulating film, 6A: first heat sensitive element, 6B: second heat sensitive element, 7A: first wiring film, 7B: second wiring film, 23d, 33d: gap, A: opening

## Claims

1. An infrared sensor apparatus comprising:
an infrared sensor body; and
a light guiding path member that is provided so as to surround at least an infrared receiving surface of the infrared sensor body and that has an opening immediately above the infrared receiving surface;
wherein the light guiding path member is made of a plate material and at least one of the surfaces of the light guiding path member surrounding the infrared receiving surface is an infrared reflecting surface that is composed of an inclined plate part with the surface thereof on the infrared receiving surface side being inclined towards the opening side.

2. The infrared sensor apparatus according to claim 1, comprising a substrate on which the infrared sensor body and the light guiding path member are installed, wherein
the light guiding path member has a supporting plate part that is erected on the substrate and that is configured to support the inclined plate part so as to be spaced apart from the infrared sensor body and the substrate, and
the supporting plate part is installed so as to be spaced apart from the infrared sensor body.

3. The infrared sensor apparatus according to claim 2, wherein the lower portion of the supporting plate part is installed more apart from the infrared sensor body than the lower portion of the inclined plate part.

4. The infrared sensor apparatus according to claim 2, wherein a gap or cavity is formed between the supporting plate part and the inclined plate part.

5. The infrared sensor apparatus according to claim 1, wherein the infrared sensor body comprises:
an insulating film having the infrared receiving surface on the top surface thereof;
first and second heat sensitive elements that are provided so as be spaced apart from each other on the bottom surface of the insulating film; and
first and second conductive wiring films that are formed on the bottom surface of the insulating film and that are connected to the first and second heat sensitive elements respectively,
wherein the infrared receiving surface is provided on the area of the top surface of the insulating film on the first heat sensitive element side, while the area on the second heat sensitive element side is shielded from infrared radiation.
